# EUROPÄISCHE PATENTANMELDUNG

(11) **EP 0 528 085 A1**
(43) Veröffentlichungstag der Anmeldung: **24.02.1993**
(21) Anmeldenummer: 91307635.2
(22) Anmeldetag: 19.08.1991
(51) Int. Cl.: H04L 12/64, H04L 12/56

(54) **Fernmeldenetz mit ATM- und STM-Vermittlung**

(71) Anmelder: SIEMENS AKTIENGESELLSCHAFT, D-80333 München (DE); GPT LIMITED, Coventry, CV3 1HJ (GB)
(72) Erfinder: Schmidt, Lothar, W-8080 Fürstenfeldbruck (DE); Mallinson, Andy, Poole BH12 1HX (GB); Jugel, Alfred, W-8192 Geretsried (DE); Rau, Peter, Dr., W-8000 München 60 (DE)

(57) **Zusammenfassung**

Es besteht in vorzugsweise überwiegender Anzahl aus ATM-Vermittlungen (ATM) und in vorzugsweise geringer Anzahl aus STM-Vermittlungen (STM). Von einer STM-Vermittlung (z. B. STM1) kommende und über eine ATM-Vermittlung (z. B. ATM1) zu einer weiteren STM- Vermittlung (z. B. STMy) zu vermittelnde Informationen werden zur Verringerung der Paketierzeit für die Durchschaltung durch die ATM-Vermittlung (ATM1) in Kurzzellen paketiert, die eine gegenüber den genormten für eine Informationsübertragung zwischen ATM-Vermittlungen verwendeten Nachrichtenzellen kürzere Länge aufweisen.

## Beschreibung

Die Erfindung betrifft ein Fernmeldenetz, dessen Vermittlungsstellen in vorzugsweise überwiegender Anzahl auf der Basis asynchroner Durchschaltung von Nachrichtenpaketen in Nachrichtenzellen fester Länge über virtuelle Verbindungen (ATM-Vermittlungen) und in vorzugsweise geringer Anzahl auf der Basis synchroner leitungsvermittelter Durchschaltung arbeiten (STM-Vermittlungen), mit den ATM-Vermittlungen zugeordneten Schnittstellen, die dem Anschluß von mit STM-Vermittlungen verbindenden, leitungsvermittelte Nachrichten führende Übertragungsleitungen dienen.

Ein derartiges Fernmeldenetz ist als Übergangsstadium zu künftigen Telekommunikations-Netzen zu verstehen, in denen durchgängig der Asynchronous-Transfer-Modus (ATM-Modus) zur Anwendung kommt. Gegenüber den derzeit installierten Fernmeldenetzen, die im Synchronous-Transfer-Modus (STM-Modus) arbeiten, weisen im ATM-Modus arbeitende Fernmeldenetze den wesentlichen Vorteil auf, daß die verfügbare Übertragungskapazität eines Übertragungskanals flexibel für eine Vielzahl von Diensten wie Sprache, Daten, Bildübertragung nutzbar ist und dabei zeit- und bedarfsabhängig einem einzigen Dienst oder einer Vielzahl von Diensten zugeteilt werden kann.

Die Einführung eines universellen Telekommunikationsnetzes auf ATM-Basis kann nur dann erfolgreich sein, wenn die Möglichkeit einer Zusammenarbeit bisher bestehender auf STM-Basis arbeitender, 64 Kb/s-Sprachdienste abwickelnder Fernmeldenetze mit den neu entstehenden, auf ATM-Basis arbeitenden Vermittlungsstellen in wirtschaftlicher Weise möglich ist.

In diesem Zusammenhang ist eine Hybridlösung für ein Fernmeldenetz vorgeschlagen worden, die darauf hinausläuft, bei den Vermittlungsstellen drei funktional getrennte Systemkomponenten vorzusehen. Zum einen nämlich einen sogenannten Cross Connector für den Anschluß von Übertragungsleitungen, über die im STM-Modus Informationen höherer Bitraten, beispielsweise 2 Mb/s übertragen werden, der im wesentlichen die Funktionen eines elektronischen Hauptverteilers übernimmt. Ferner eine Schmalbandvermittlung, die praktisch den derzeitigen Schmalbandvermittlungen für den Anschluß von Anschluß- und Übertragungsleitungen für auf STM-Basis bei einer Bitrate von 64 Kb/s übertragene Informationen entspricht. Schließlich eine Breitbandvermittlung, die auf ATM-Basis, also als Paketvermittlung mit Nachrichtenzellen fester Länge und der Herstellung virtueller Verbindungen arbeitet. Jede der drei Systemkomponenten der Vermittlungsstellen eines solchen Hybridnetzes weist gesonderte Anschlußeinheiten und ein gesondertes Koppelnetz auf. Selbstverständlich ist eine derartige Lösung sehr kosten- und wartungsaufwendig.

Bei dem eingangs erwähnten Fernmeldenetz sind demgegenüber auf ATM-Basis arbeitende universelle Netzknoten vorgesehen, die mit fortschreitendem Netzausbau in ihrer Anzahl immer mehr noch auf STM-Basis arbeitende Netzknoten überwiegen sollen und schließlich als einzige Netzknotenart vorhanden sein werden. Diese universellen Netzknoten weisen nur ein einziges ATM-Koppelnetz für alle drei Anschluß- bzw. Einsatzarten des erwähnten Hybride-Fernmeldesysttems auf. Sie sind ferner mit einheitlichen Schnittstellen und einer zentralen Steuerung versehen und arbeiten mit einheitlicher Wegesuche und einheitlichen Wartungsfunktionen. Dadurch ergeben sich niedrigere Investitionskosten und ein geringerer Wartungsaufwand als bei der erwähnten Hybridlösung. Außerdem ist eine Erweiterbarkeit ohne besonderen Aufwand in der Grundausstattung gegeben.

Um auf STM-Basis herangeführte Informationen in solchen Netzknoten bearbeiten zu können, müssen diese in Schnittstelleneinheiten in ATM-Nachrichtenzellen paketiert und nach Durchgang durch das Koppelfeld wieder depaketiert und in adressierte Zeitschlitze eingeblendet werden, wozu die betreffenden Schnittstellen Paketier-Depaketiereinrichtungen aufweisen.

Das Format solcher ATM-Nachrichtenzellen ist schon weitgehend festgelegt, wobei je Nachrichtenzelle außer einem Nachrichtenkopf ein Nutzinformationsfeld vorgesehen ist, das 48 jeweils 8 Bit umfassende Zeitplätze, sogenannte Oktetts, umfaßt, von denen wenigstens eine für weitere Angaben beispielsweise über die Natur der Nachrichtenzelle ausgenutzt sein kann.

Für die Paketierung der jeweils mit 8 Bit kodierten Abtastproben eines Zeitkanals für die Übertragung von 64 K b/s-Sprachinformationen, wird in diesem Fall die Zeitdauer von 47 Abtastpulsrahmen benötigt, so daß zusammen mit dem genannten einen Oktett eine Paketierzeit von 48x125 µs = 6ms erforderlich ist. Das Depaketieren erfordert mit Jitter-Ausgleich ca. 0,25 ms, so daß insgesamt bei der Übertragung in einer Richtung eine Zeitverzögerung von 6,25 ms entsteht.

In heutigen digitalen Fernsprechnetzen sind als Laufzeiten innerhalb der Vermittlungsstellen, die in erster Linie durch die Analog-Digital-Wandlung bzw. Digital-Analog-Wandlung zustandekommen, für Ortsvermittlungsstellen ca. 1,5 ms und für Durchgangsvermittlungsstellen ca. 1,0 ms je Übertragungsrichtung zugelassen, so daß sich für ein Netz, in dem eine Verbindung über maximal drei ortsvermittlungsstellen und maximal sechs Durchgangsvermittlungsstellen bei einer maximalen Entfernung von etwa 1000 km läuft, eine zulässige Gesamtlaufzeit von höchstens 15 ms je Übertragungsrichtung ergibt. In Großbritannien liegt die höchstzulässige Verzögerungszeit sogar nur bei 12,5 ms, in den USA sind es 17,5 ms je Übertragungsrichtung.

Die Forderungen an die Einhaltung von Laufzeitgrenzwerten dient dazu, die Sprachqualität sicherzustellen, da größere Laufzeiten wegen der Reflektionen der Sprachsignale an den Gabelschaltungen im Teilnehmerendgerät des hörenden Teilnehmers zu spürbaren Echoeffekten führen.

Die vorgenannten, im Zusammenhang mit dem Paketier-Depaketier-Vorgang verbundenen Verzögerungen von 6,25 ms liegen also um ca. 5 ms über der geforderten Laufzeitgrenze für Vermittlungen. Zur Gewährleistung der geforderten Sprachqualität unter diesen Umständen müßten je Übertragungsrichtung getrennte Echokompensatoren eingesetzt werden. Es müßte darüber hinaus aber auch dafür Sorge getragen sein, daß bei Sprechverbindungen mehrere Netzübergänge, bei denen es jeweils zu der diskutierten Verzögerung durch Paketier-Depaketiervorgänge kommt, vermieden werden, da eine Laufzeitkompensation in der Größenordnung wie sie bei mehrereren Netzübergängen erforderlich wird, mit Echokompensatoren nicht mehr zu bewältigen ist. Dies würde aber eine aufwendige Vermaschung zwischen den STM-Vermittlungsstellen des noch bestehenden STM-Netzes und den ATM-Vermittlungsstellen erfordern, die die Grundlage für das künftige Universalnetz sein sollen.

Im Zusammenhang mit einem Fernmeldenetz der eingangs genannten Art ist daher zum Zwecke der Verringerung der Verzögerungszeiten bei der Paketierung von STM-Sprachinformationen, die mit einer Übertragungsrate von 64 Kb/s übertragen werden, vorgeschlagen worden, die Nachrichtenzellen fester Länge des ATM-Systems nur teilweise mit STM-Nachrichten zu belegen (europäische Patentanmeldung 88 11 57 25.9.) Ein solches Vorgehen bedeutet natürlich eine schlechte Ausnutzung der Übertragungskapazität. Um hier einen gewissen Ausgleich zu schaffen, ist in der genannten Patentanmeldung auch vorgeschlagen worden, den Belegungsgrad der Nachrichtenzellen jeweils beim Verbindungsaufbau entsprechend beim Verbindungsaufbau mit übertragenen Verbindungsaufbau-Informationen verbindungsindividuell festzulegen, und dabei für Fernverbindungen, die über mehrere Vermittlungsstellen führen, klein zu halten, dagegen für Verbindungen im Nahbereich einen größeren Füllungsgrad zuzulassen.

Gerade bei Fernverbindungen ist aber aus wirtschaftlichen Gründen eine hohe Bitrate besonders unerwünscht, da dort der Kostenanteil für die Übertragungstechnbik denjenigen für die Vermittlungsstellen überwiegt. Davon abgesehen, erfordern natürlich die genannten Maßnahmen zur Verbesserung der Übertragungskapazitätsausnutzung steuerungsmaßig einen beträchtlichen Aufwand.

Die Aufgabe der Erfindung besteht daher darin, ein Fernmeldenetz der eingangs genannten Art so zu gestalten, daß im Hinblick auf die geforderte Sprachqualität Echokompensatoren und aufwendige Vermaschungsstrukturen weitgehend vermieden werden können und dennoch keine wesentliche Verringerung des Ausnutzungsgrades der vorhandenen Übertragungskapazität für Nutzinformationen, hier also Sprachinformationen, hinzunehmen ist.

Diese Aufgabe wird erfindungsgemäß dadurch gelöst, daß die in den genannten Schnittstellen der ATM-Vermittlungen enthaltenen Paketier/Depaketier-Einrichtungen für zwischen einer STM-Vermittlung über eine ATM-Vermittlung und einer weiteren ATM-Vermittlung oder einem für den Empfang von asynchron durchgeschalteten Nachrichtenpaketen ausgestatteten Endgeräten (ATM-Endgeräten) herzustellende Verbindungen die leitungsvermittelt ankommenden Nachrichten in Nachrichtenzellen einer ersten festen Länge paketieren, wie sie auch für Verbindungen zwischen ATM-Vermittlungen oder ATM-Endgeräten gebildet werden, für über eine ATM-Vermittlung herzustellende Verbindungen zwischen STM-Vermittlungen dagegen die leitungsvermittelten Nachrichten zur Durchschaltung über die ATM-Vermittlung in Nachrichtenzellen einer demgegenüber kürzeren festen Länge paketiert werden.

Bei der erfindungsgemäßen Lösung bleiben also keine Nachrichtenzellenteile ungenutzt, so daß sich selbst unter Berücksichtigung einer insgesamt gesehen etwas ungünstigeren Relation zwischen Kopfteil und Informationsteil der Nachrichtenzellen eine bessere Ausnutzung der Übertragungskapazität für Nutzinformationen ergibt.

Weitere Ausgestaltungen der Erfindung betreffen aufwandsgünstig zu realisierende Alternativen bei der auch für solche Kurzzellen erforderlichen Synchronisierung auf den Zellenanfang.

So wird im Nachrichtenzellenkopf der Kurzzellen zusammen mit einem Synchronwort eine Information über die Längenkategorie entweder der benachbart nachfolgenden Nachrichtenzelle oder über die Längenkategorie der zugehörigen Zelle eingeblendet. Bei einer Alternativen hierzu werden Synchronworte ohne eine solche Längenangabe im Abstand der Länge einer Kurzzelle in die Folge der Nachrichtenzellen eingefügt, wobei vorausgesetzt ist, daß die Länge der Kurzzellen ein ganzzahliger Bruchteil der Länge der Nachrichtenzellen voller Länge ist.

Nachstehend wird die Erfindung anhand eines Ausführungsbeispiels unter Bezugnahme auf eine Zeichnung näher erläutert.

In der Zeichnung zeigen:
FIG 1 das Format einer internen Standardnachrichtenzelle für die Durchschaltung durch Vermittlungstellen in ATM-Fernmeldenetzen,
FIG 2 das Format einer erfindungsgemäß innerhalb einer ATM-Vermittlung für die Durchschaltung von STM-Nachrichten zu STM-Vermittlungen verwendete Kurzzelle.
FIG 3 einen Teil eines STM-Vermittlungen und ATM-Vermittlungen aufweisenden Fernmeldenetzes.
FIG 4 und 5 Folgen von Kurz- und Standardzellen zusammen mit Synchronworten zur Veranschaulichung unterschiedlicher Synchronisationsvarinaten.

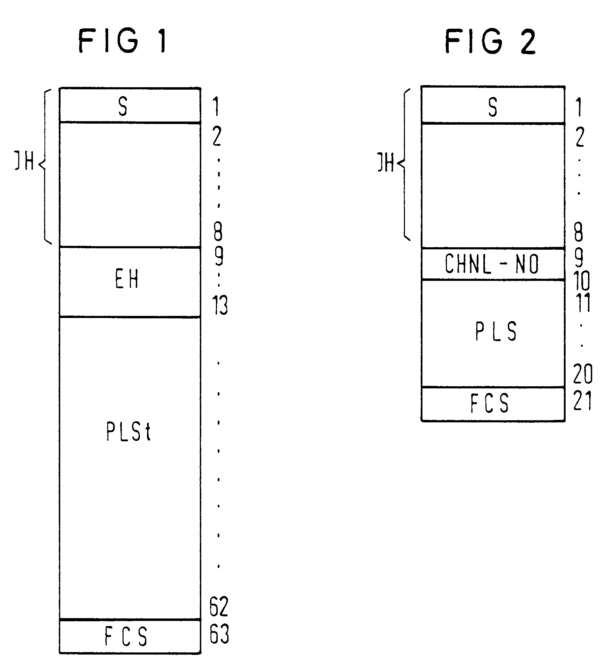

Die Standardnachrichtenzelle gemäß FIG 1 weist insgesamt 63 sogenannte Oktetts, d. h Zeitplätze für jeweils 8 Bit auf. 8 solcher Oktetts werden für einen internen Zellenkopf IH (Internal Header) eingenommen, der im wesentlichen ein Synchronisationsoktett S, ferner Wegeinformationen für den Weg durch das Koppelfeld enthaltende Oktetts, sowie ein Oktett für eine Zellennummer zur Bestimmung der Zellenreihenfolge enthält. Ein weiterer Zellenkopf, der externe Zellenkopf EH (External Header) umfaßt 5 Oktetts und enthält Angaben über einen virtuellen Kanal und einen virtuellen Verbindungsweg, dem die betreffende Nachrichtenzelle zugeordnet ist.

Es schließt sich ein 48 Oktetts umfassender Informationsteil PL an, in dem die eigentlichen Fernmeldeinformationen übertragen werden und schließlich folgt noch ein Oktett FCS, das das Zellenende kennzeichnet.

Der vorerwähnte interne Zellenkopf IH wird nach Durchlaufen einer vermittlungsstelle vor einer Weiterübertragung der Nachrichtenzelle entfernt, so daß extern in Erscheinung tretende Zellen lediglich aus dem externen Zellenkopf EH und aus dem Informationsteil PLST bestehen.

Die Anzahl der Oktetts der in FIG 2 dargestellten, erfindungsgemäß für die Durchschaltung von STM-Informationen durch ATM-Vermittlungen verwendeten Kurzzelle ist eine Teilmenge der Oktetts der Standardzelle, hier als Beispiel mit 21 Oktetts ein Drittel der Anzahl der Oktetts einer Standardzelle gemäß FIG 1.

Der interne Zellenkopf IH dieser Kurzzelle ist gleich lang und in derselben Weise belegt wie derjenige der Standardzelle.

Da die Kurzzelle in dieser Form lediglich innerhalb einer ATM-Vermittlung Anwendung findet, wird ein externer Zellenkopf EH wie bei der Standardzelle hier nicht benötigt.

Stattdessen enthält ein zehntes Oktett eine Angabe darüber, daß es sich bei der betreffenden Nachrichtenzelle um eine Kurzzelle handelt und zwei weitere Octetts dienen der Angabe der Nummer des Zeitkanals der STM-Informationen und eine Angabe über die Zielschnittstelle, über die die STM-Nachrichten von der ATM-Vermittlung aus an eine STM-Vermittlung weitergegeben werden sollen. 8 Oktetts 13 bis 20 bilden den Informationsteil PLS dieser Nachrichtenzelle, dessen Länge ein Sechstel der Länge des Informationsteils einer Standardzelle beträgt, wodurch die Paketierzeit von 6 ms auf 1 ms reduziert wird. Schließlich kennzeichnet eine Angabe FCS im Octett 21 das Ende der Zelle.

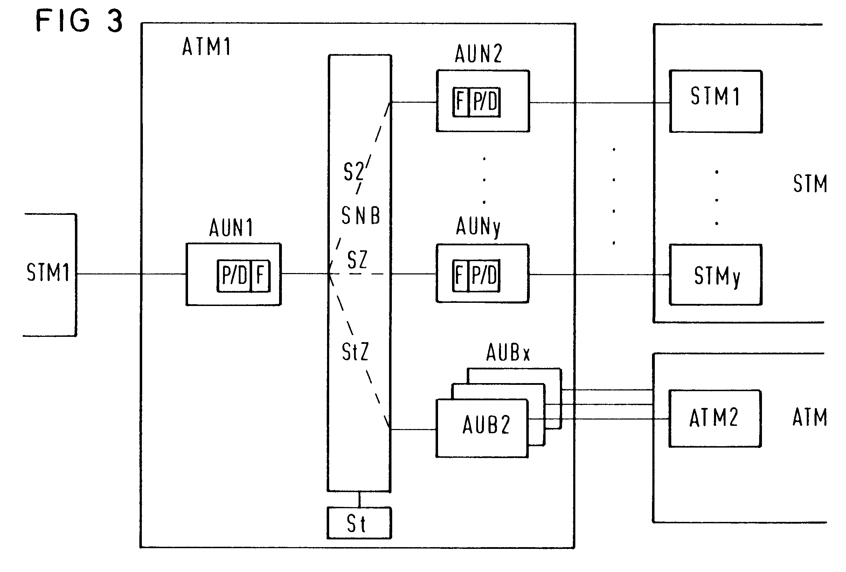

Die FIG 3 zeigt den Ausschnitt aus einem Fernmeldevermittlungsnetz, das sowohl auf ATM-Basis als auch auf STM-Basis arbeitende vermittlungsstellen umfaßt.

Mit einer mehr ins einzelne gehend dargestellten ATM-Vermittlung ATM1 stehen über Schnittstellen AUN1 bis AUNy STM-Vermittlungen STM1 bis STMYy in Verbindung.

Außerdem besteht eine Verbindung der ATM-Vermittlung ATM1 mit weiteren ATM-Vermittlungen, z. B. ATM2 über Schnittstellen AUB2 bis AUBx.

Als wesentlicher Bestandteil der ATM-Vermittlung ATM1 sind ein Breitbandkoppelfeld SNB und eine Vermittlungssteuerung ST dargestellt.

In den Schnittstelleneinheiten AUN1 bis AUNy befinden sich Paketier/Depaketiereinheiten P/D, mit deren Hilfe die kodierten Zeitschlitzinhalte der von einer STM-Vermittlung kommenden Kanalinformationen in eine ATM-Nachrichtenzelle eingeordnet werden bzw. ausgangsseitig wieder depaketiert und in Zeitschlitze zur Weiterübertragung zu einer STM-Vermittlung eingeordnet werden. Formatiereinheiten F dieser Schnittstelleneinheiten sorgen für eine Formatierung von Nachrichtenzellen als Standardzelle oder als Kurzzelle.

Sofern es sich um Verbindungen handelt, die von einer STM-Vermittlung, also beispielsweise von der STM-Vermittlung STM1, über die ATM-Vermittlung ATM1 zu einer weiteren ATM-Vermittlung, beispielsweise ATM2 führen, werden in der Schnittstelle AUN1 Zellen des Standardformates gebildet. Es wird dabei dem Umstand Rechnung getragen, daß auf Übertragungsstrecken zwischen ATM-Vermittlungen, also hier zwischen der Schnittstelle AUB1 und der ATM-Vermittlung ATM2 das genormte ATM-Übertragungsprotokoll eingehalten sein muß.

Sofern es sich jedoch um Verbindungen zwischen zwei STM-Vermittlungen handelt, also beispielsweise Verbindungen zwischen der Vermittlung STM1 und der Vermittlung STM2, die über die ATM-Vermittlung ATM1 geführt werden sollen, werden erfindungsgemäß in der Schnittstelle AUN1 Kurzzellen der vorgenannten Art gebildet, als solche über das Koppelfeld SNB vermittelt und in der Schnittstelle AUN2 wieder depaketiert, wobei ihr Inhalt wieder in Zeitschlitze des betreffenden, im Nutzteil der Zelle angegebenen Zeitkanals eingeordnet wird. Die Kurzzelle findet also lediglich innerhalb der ATM-Vermittlung ATM1 Verwendung, womit keine Verstöße gegen vorgegebene Protokolle entstehen. Andererseits ist, wie gewünscht, vermieden, daß beim Paketieren unzulässig hohe Verzögerungszeiten entstehen, die bei der Übertragung von Sprachsignalen zu den vorstehend erwähnten unzulässigen Echoeffekten führen können.

In den Schnittstellen AUN werden die Synchronworte der dort gebildeten Nachrichtenzellen, seien es Zellen im Standardformat gemäß FIG 1 oder Kurzzellen gemäß FIG 2 mit einem Bit versehen, das eine Zellenlängenangabe enthält.

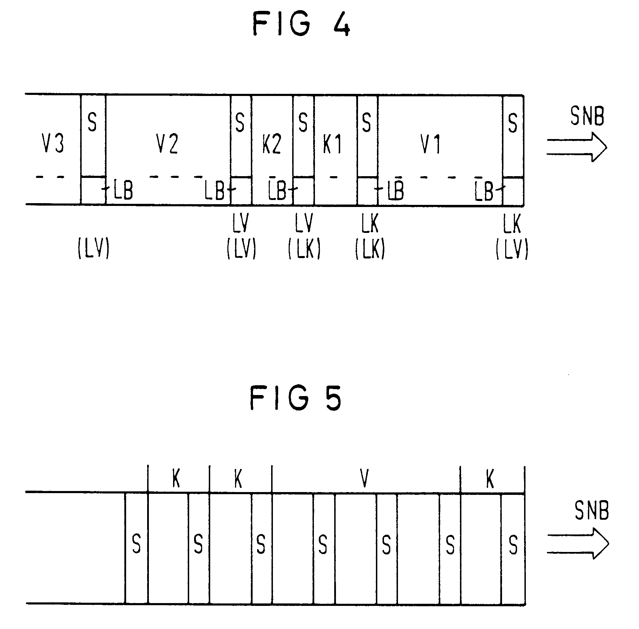

Die FIG 4 zeigt eine Folge von in einer solchen Schnittstelle gebildeten Standardzellen voller Länge V und Kurzzellen K, die an das Breitbandkoppelfeld SNB einer ATM-Vermittlung weitergegeben werden. Gemäß einer ersten weiteren Ausgestaltung der Erfindung ist in einem Bit LB der Synchronworte S dieser Nachrichtenzellen eine Angabe LV bzw. LK über die Länge der zeitlich benachbart nachfolgenden Nachrichtenzelle enthalten. So gibt das betreffende Bit des Synchronwortes der in der zeitlichen Reihenfolge ersten Standardnachrichtenzelle voller Länge V1 an, daß die nachfolgende Nachrichtenzelle, also K1, eine Kurzzelle ist (LK). Das betreffende Bit des Synchronwortes dieser Nachrichtenzelle weist ebenfalls auf die Nachfolge einer Kurzzelle, nämlich die Kurzzelle K2 hin, usw. usw.

Gemäß einer anderen Variante dieser Ausgestaltung, die in der FIG 4 durch Klammerausdrücke veranschaulicht ist, gibt jeweils ein Bit LB in den Synchronworten der Nachrichtenzelle die Länge der zugehörigen nachfolgenden Nachrichtenzelle an, d. h. (LK) bzw. (LV).

Gemäß einer anderen Variante wird zur Lösung des Problems der Synchronisation bei der Aufeinanderfolge von Kurzzellen und Standardzellen ein Synchronwort ohne weitere Merkmale im Abstand der Länge einer Kurzzelle in den dem Breitbandkoppelfeld SNB zugeführten Bitstrom eingeblendet, wie dies in FIG 5 veranschaulicht ist.

### Bezugszeichenliste

- IH =: Interner Zellenkopf
- S =: Synchronisationsoktett
- EH =: externer Zellenkopf
- PL =: Informationsteil
- PLS =: Informationsteil
- ATM1, ATM2 =: ATM-Vermittlung
- AUB2 bis AUBx =: Schnittstelle
- AUN bis AUNy =: Schnittstelleneinheit
- P/D =: Paketier/Depaketiereinheit
- F =: Formatierungseinheit
- V =: Standardzelle
- K =: Kurzzelle
- SNB =: Breitbandkoppelfeld
- LB =: Synchronisationsbit
- S =: Synchronwort
- LV, LK =: Zeilenlängenangabe

## Patentansprüche

1. Fernmeldenetz, dessen Vermittlungsstellen (ATM, STM) in vorzugsweise überwiegender Anzahl auf der Basis asynchroner Durchschaltung von Nachrichtenpaketen in Nachrichtenzellen fester Länge über virtuelle Verbindungen (ATM-Vermittlungen) und in vorzugsweise geringer Anzahl auf der Basis synchroner leitungsvermittlter Durchschaltung arbeiten (STM-Vermittlung), mit den ATM-Vermittlungen (ATM) zugeordneten Schnittstellen (AUN), die dem Anschluß von mit STM-Vermittlungen (STM) verbindenden, leitungsvermittelnde Nachrichten führenden Übertragungsleitungen dienen,
**dadurch gekennzeichnet,**
daß die in den genannten Schnittstellen (AUN) der ATM-Vermittlungen (ATM) enthaltenen Paketier-Depaketiereinrichtungen (P/D) für zwischen einer STM-Vermittlung (z. B. STM1) über eine ATM-Vermittlung (z. B. ATM1) und einer weiteren ATM-Vermittlung (z. B. ATM2) oder einem für den Empfang von asynchron durchgeschalteten Nachrichtenpaketen ausgestattetem Endgerät (ATM-Endgerät) herzustellende Verbindungen die leitungsvermittelt ankommende Nachrichten in Nachrichtenzellen einer ersten festen Länge paketieren, wie sie auch für Verbindungen zwischen ATM-Vermittlungen oder ATM-Endgeräten gebildet werden, für über eine ATM-Vermittlung (z. B. ATM1) herzustellende Verbindungen zwischen STM-Vermittlungen (STM1, STM2) dagegen die leitungsvermittelten Nachrichten zur Durchschaltung über die ATM-Vermittlung in Nachrichtenzellen einer demgegenüber kürzeren festen Länge paketieren.

2. Fernmeldenetz nach Anspruch 1,
**dadurch gekennzeichnet,**
daß die Nachrichtenzellen kürzerer fester Länge als Zellenkopf nur einen internen Zellenkopf (IH) aufweisen.

3. Fernmeldenetz nach Anspruch 1 oder 2,
**dadurch gekennzeichnet,**
(V, K) Synchronworte (S) zur Kennzeichnung des Zellenanfangs vorangestellt werden, die jeweils auch eine Angabe (LV, LK) über die Längenkategorie der zugehörigen Nachrichtenzelle enthalten.

4. Fernmeldenetz nach Anspruch 1 oder 2,
**dadurch gekennzeichnet,**
daß in den genannten Schnittstellen (AUN) den Nachrichtenzellen (KV) Synchronisierworte (S) zur Kennzeichnung des Zellenanfangs vorangestellt werden, die jeweils auch eine Angabe ((LK), (LV)) über die Längenkategorie der zeitlich benachbart nachfolgenden Nachrichtenzelle enthalten.

5. Fernmeldesystem nach Anspruch 1 oder 2,
**dadurch gekennzeichnet,**
daß bei verkürzten Nachrichtenzellen, deren Länge ein ganzzahliger Bruchteil der Länge der Nachrichtenzellen voller Länge (V) ist, in den genannten Schnittstellen (AUN) im Abstand der Länge der verkürzten Nachrichtenzellen (K) in der Folge der erzeugten Nachrichtenzellen (LV) Synchronworte (S) jeweils am Anfang der Nachrichtenzellen bzw. bei Nachrichtenzellen voller Länge (V) auch innerhalb dieser Zellen eingeblendet werden.
